# EUROPEAN PATENT SPECIFICATION

(11) **EP 1 211 171 B1**
(45) Date of publication and mention of the grant of the patent: **04.02.2004**
(21) Application number: 01309841.3
(22) Date of filing: 22.11.2001
(51) Int. Cl.: B63B 1/08

(54) **Method for reducing wake making resistance at transom stern and transom stern form**
Verfahren zur Verringerung des in Heck entstanden Wellenwiderstands und Heckform
Procédé pour la réduction de la résistance à formation de vagues et forme du tableau d'arrière

(30) Priority: 22.11.2000 JP 2000355925
(43) Date of publication of application: 05.06.2002
(73) Proprietor: Kabushiki Kaisha Kawasaki Zosen, Kobe, 650-8670 (JP)
(72) Inventor: Saito, Yasuo, Suita-shi, Osaka 565-0843 (JP); Iwasaki, Yasunori, Miki-shi, Hyogo 673-0533 (JP); Ebira, Kazuyuki, Kobe-shi, Hyogo 651-2274 (JP)
(74) Representative: Abbie, Andrew Kenneth

(56) References cited:
- DE-A- 1 531 561
- DE-A- 3 808 859
- DE-A- 4 412 853
- FR-E- 60 927
- GB-A- 383 575
- SCHMIDT W: "SPEZIELLE SCHIFFBAULICHE STRUKTUREN AM BEISPIEL DES FAST MONOHULL" SCHIFF UND HAFEN, SEEHAFEN-VERLAG ERIK BLUMENFELD. HAMBURG, DE, vol. 52, no. 10, October 2000 (2000-10), pages 135,137-140, XP001017664 ISSN: 0938-1643

## Description

### Field of the Invention

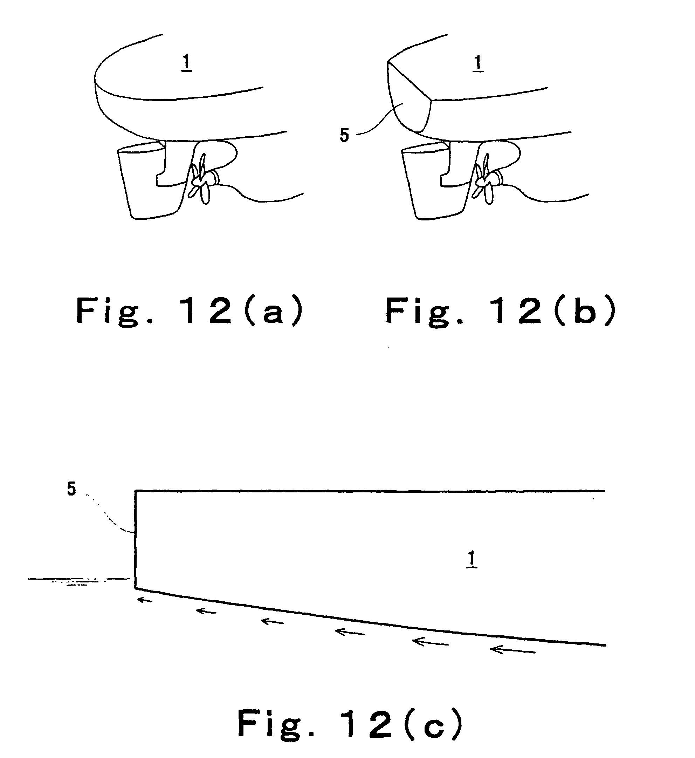

The present invention relates to a transom stem structure capable of reducing the stem wave making resistance of conventional ships having a transom stem (displacement ships that voyage at a design speed substantially corresponding to a Froude's number (Fn) of 0. 2 - 0.4). Referring to Fig. 12(b), a transom stem is a stem having a substantially vertical rearmost end face (stem end) 5. Fig. 12(a) shows a cruiser stem. Herein, the Fn is expressed as:
Fn = V/√ (L_{WL} g), where V is ship speed (m/s), L_{WL} is waterline length on design draught (m), and g is the acceleration of gravity (m/s²). Here, the "waterline" means horizontal line parallel to the base line.

### Description of the Related Art

Conventionally, there have been many examples of lightweight aluminium alloy constructed high speed craft or the like (Fn ≧ 0.4), which have a movable plate (trim tab) protruding from the stem end or a wedge provided on the stem bottom in order to reduce resistance and motion of the craft (for example, see Japanese Laid-Open Patent Publication No. Hei. 9-52591 or Japanese Laid-Open Patent Publication No. Sho. 62-8891).

Because of its small displacement and high speed, the high speed craft is capable of greatly lifting the stem end by a lift generated by the trim tab and the wedge provided at the stem end. In the high speed craft, since the deeper transom immersion is, the larger the stem wave making resistance is, the stern wave making resistance could be reduced by lifting the stem end by the lift generated by the trim tab or the wedge.

However, in a so-called conventional ship, i.e., the displacement ship that voyages at a design speed substantially corresponding to a Fn of 0.2-0.4, since the ship speed is relatively low and the displacement is large as compared to the high speed craft, it is difficult to greatly lift the stem by means of a trim tab or wedge and, therefore, its running condition is hardly changed by these means. So, it has been considered that stem wave making cannot be reduced in this ship.

In addition, since the stem end of the high speed craft has a substantially rectangular cross section, a trim tab or wedge of two-dimensional shape can be mounted relatively easily, whereas since a stern end of the conventional ship has a convexly curved cross section, the mounting of the two-dimensional parts creates a discontinuity, which increases resistance. In the conventional displacement ship which has a transom stem and voyages at a design speed corresponding substantially to Fn of 0.2 - 0.4, the stern wave generated by the transom stem end is increased, and a wave crest of the stem wave sometimes causes disturbed surface, thereby producing dead water around the stem transom part. When these phenomena are seen from the view point of propulsive performance, the stern wave with disturbed surface produces a large stem wave making resistance, causing the horse power requirement and fuel oil consumption (FOC) to be significantly increased. Under the circumstances, reduction of the stem wave has been a challenge to naval architects.

DE-A-3808859 discloses a displacement ship having a transom stem and a longitudinal hull centre line profile defining an inflection point, with a portion of the hull forward of said inflection point sloping upwardly to said inflection point. The inflection point is positioned substantially above the ship's propellers to allow clearance for the use of larger propellers and provide increased clearance above the propellers in order to enhance propeller efficiency and prevent vibration due to surface forces caused by rotation of the propellers.

### SUMMARY OF THE INVENTION

The invention provides a method of reducing the wave making resistance of a displacement ship having a transom stem and a design speed corresponding substantially to a Froude Number of 0.2 to 0.4, the method comprising providing the hull of said ship with a longitudinal centre line profile having an inflection point at a longitudinal distance of 0.1 to 10% Lpp (length between perpendiculars) from the stem end of the ship, with the portion of the hull profile forward of said inflection point sloping upwardly to said inflection point and the portion of the hull profile rearward of the inflection point being horizontal or sloping downwardly, and positioning the lower end of the stem end relative to the design draught such that the ratio γ of the distance between the base line at the hull centre line and said lower end and the distance between said base line and the design draught at the hull centre line is 0.95 to 1.2 such that, in use, a first flow condition is generated forward of said inflection point and a second flow condition is generated between said inflection point and said stem end to provide accelerated flow rearwardly of said inflection point.

The hull centre line profile between said stem end and said inflection point may be provided by fitting an extension to the stem end of an existing ship.

The invention also includes a displacement ship having a transom stem and a longitudinal hull centre line profile defining an inflection point with a portion of the hull centre line profile forward of said inflection point sloping upwardly to said inflection point and the portion of the hull centre line profile rearwardly of the inflection point ceasing to slope upwardly, characterised in that the ship has a design speed corresponding substantially to a Froude Number of 0.2 to 0.4, in that the longitudinal distance between the stem end of the ship and said inflection point is 0.1 to 10% Lpp (length between perpendiculars) and in that the lower end of the stem end is positioned relative to the design draught such that the ratio γ of the distance between the base line at the hull centre line and said lower end of the stem end and the distance between said base line and the design draught at the hull centre line is 0.95 to 1.2 such that, in use, a first flow condition is generated forward of said inflection point and a second flow condition is generated between said inflection point and said stern end to provide an accelerated flow rearwardly of said inflection point.

From the inflection point to the stem end, the longitudinal centre line profile may be flat or gently curved and a line connecting the inflection point to the lower end of the stem end may be horizontal or downwardly inclined with respect of the design load waterline such that an angle α made between said line and the design load waterline is 0 to 20 degrees.

The angle β at which tangential lines forward and rearward of the inflection point at the hull bottom may intersect at 140 to 180 degrees.

The distance of the lower end of the stem end from the base line may be constant, or increase, in the widthways direction of the hull on either side of the hull centreline.

The hull centre line profile between the stem end and the inflection point may be defined by an extension extending from the stem end of an existing ship.

### BRIEF DESCRIPTION OF THE DRAWINGS

In order that the invention may be understood, some embodiments, which are given by way of example only, will be described with reference to the drawings, in which:
Figs. 1(a) - 1(b) are figures for explaining a technical principle of reduction of wave making resistance according to the present invention, wherein Fig. 1(a) shows the profile of a ship's stem and Fig. 1(b) shows the distribution of a relative pressure in flow field in the longitudinal direction between a ship having a conventional stem form and a ship having a stem form according to the present invention;
Figs. 2(a) - 2(c) show stem profiles;
Fig. 3(a) is a front view showing a stem part having a three-dimensional shape in which an angle of an arbitrary section of the stem part is equal to an angle α of the stem form sectioned parallel to a ship centreline, that is, the angle is fixed, and Fig. 3(b) is an explanatory figure showing change in the angle;
Fig. 4(a) is a front view showing a stem part having a three-dimensional shape in which an angle of an arbitrary section of the stem part is decreased with respect to the angle α in the breadth direction and the section of an inflection point conforms in shape to the stem end at a point, and Fig. 4(b) is an explanatory figure showing change in the angle;
Figs 5(a) is a front view showing a stem part having a three-dimensional shape in which an angle of an arbitrary section of the stem part is decreased with respect to the angle α in the breadth direction and the angle is made on the opposite side from a point, and Fig. 5(b) is an explanatory figure showing change in the angle;
Fig. 6 is a view showing planar shapes of cross sections respectively taken along lines P1-P1, P2-P2, and P3-P3 of Fig. 3, Fig. 4, and Fig. 5;
Fig. 7 illustrates a stem profile showing a state in which an angle β at which tangential lines forward and rearward of the inflection point at the hull bottom intersect is set to 140 - 180 degrees;
Fig. 8 illustrates a stem profile showing a state in which a ratio γ (Ha/Hb) of a height Ha of a lower end of the stem end from a base line to a height Hb of a design draught is set to 0.95 -1.2;
Figs. 9(a), (b) show embodiments of the present invention obtained by extending the stem end of an existing ship;
Fig. 10 shows the reduction effect of the stem wave making resistance coefficient according to the present invention based on a comparison with a conventional ship;
Fig. 11 shows a horse power reduction effect obtainable according to the present invention based on comparison with a conventional ship; and
Fig. 12(a) shows a cruiser stem form; Fig. 12(b) shows a transom stem; and Fig. 12(c) is a side view showing a conventional stem form of the transom stem of Fig. 12(b).

### DETAILED DESCRIPTION OF THE PREFERRED EMBODIMENTS

A ship according to the present invention is a so-called conventional displacement ship (a ship with Lpp more than 50m is suitable) which has a transom stem as shown in Fig. 12(b) and voyages at a design speed corresponding substantially to a Froude number (Fn) of 0.2 - 0.4. As mentioned previously, since such a ship generally has a relatively low speed and a large displacement as compared to the high speed craft, it is difficult to greatly lift the stem end thereof by the lift of the trim tab or the wedge.

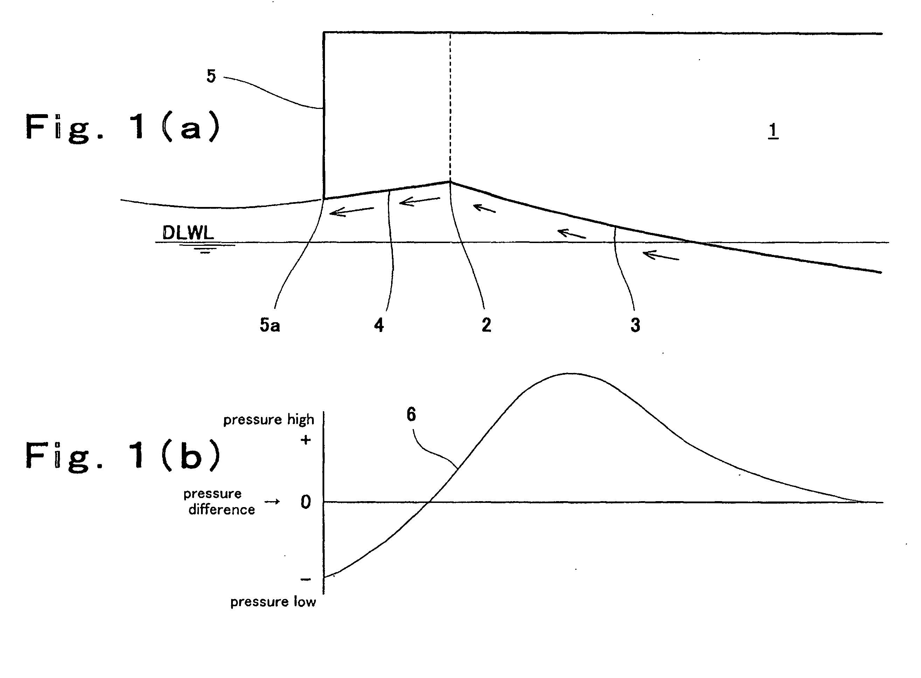

Referring to Fig. 1(a), the shape of a hull bottom sectioned along the ship centre line has an inflection point 2 between 0.1 - 10% Lpp forward of the stem end 5 of the stem 1 ("Lpp" refers to length between perpendiculars). The bottom of the stem 1 has a forward hull portion 3 and a rearward hull portion 4. The forward hull portion 3 slopes gently up to the inflection point 2 and is gently curved or flat. The rearward hull portion 4 has a length sufficient to accelerate flow from the inflection point 2 to the stern end 5, i.e., a length of 0. 1 - 10% Lpp forward of the stem end 5 and is horizontal or downwardly inclined from the inflection point 2 so as to generate a horizontal or downward flow. The lower end 5a of the stem end 5 is positioned in the vicinity of (on or above) the design draught. As should be understood from the later description, the "inflection point" refers to a shape changing point at which the shape of the hull bottom of the stem part that is sectioned along the ship centre line is knuckle-shaped or knuckle-filleted to change the flow field at that point.

As can be seen from the graph of Fig. 1(b), with the above-described shape of hull bottom, the relative pressure in a region forward of the inflection point 2 is higher than that of a ship having the conventional stem form, and therefore, based on Bernoulli's theorem in which a sum of a static pressure and a dynamic pressure is constant, the region forward of the inflection point 2 has a flow velocity lower than that of the ship having the conventional stem form, while the pressure in a region from the inflection point 2 to the stem end 5 is lower than that of the ship having the conventional stem form and therefore, the region rearward of the inflection point 2 accelerates the flow.

In other words, the flow fields forward and rearward of the inflection point 2 differ from each other. In addition, since the lower end 5a of the stem end 5 is located in the vicinity of (on or above) the design draught, the accelerated flow prevents the stem wave. Besides, since the disturbed surface hardly occurs, the stem wave making resistance can be significantly reduced as a whole.
An angle β made between the forward hull portion 3 and the rearward hull portion 4 which are respectively located forwardly and rearwardly of the inflection point 2 is determined as mentioned later so that some increase in drag due to the downwardly inclined rear hull bottom does not negate the reduction effect of the stem wave making resistance.

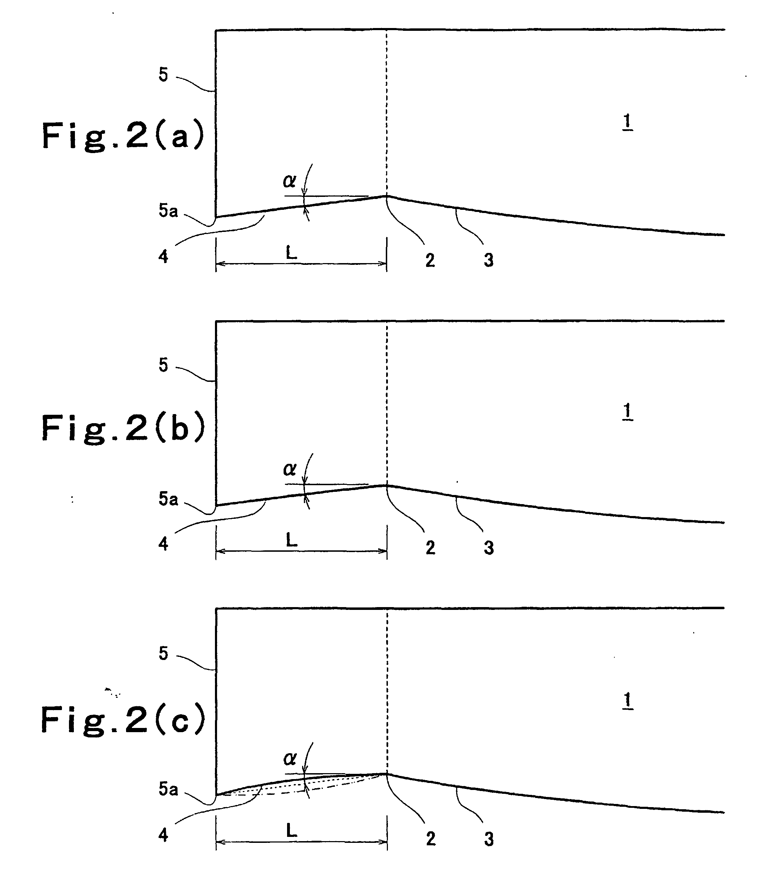

Figs. 2(a) - 2(c) show stem profiles (hull side cross sections) sectioned along the ship centre line. The inflection point 2 is provided at a position L (= 0.1 - 10%Lpp) forward of the stem end 5. The inflection point 2 shown in Fig. 2(a) is knuckle-shaped and the inflection point 2 shown in Fig. 2(b) is knuckle-filleted. The shape from the inflection point 2 to the stem end 5 is straight line as shown in Fig. 2(a), and the shape from the inflection point 2 to the stem end 5 is gently curved as shown in Fig. 2(c). When the shape is gently curved, it is a convex curve (as indicated by a solid line of Fig. 2(c)) or a concave curve (as indicated by an imaginary line of Fig. 2(c)).

Assuming that an angle made between a line (hull bottom line) connecting the inflection point 2 and the lower end 5a of the stem end 5 and the design load waterline DLWL is α, it is preferable that the hull bottom line is parallel to the design load waterline DLWL (α = 0 degree), or downwardly inclined with respect to the design load waterline DLWL at an angle of 20 or less (α ≧ 20 degrees). By horizontally or downwardly flowing the accelerated water flowing from the stem end 5, the disturbed surface or the stem wave is reduced.

The reason why the inflection point 2 is provided at the position L (0.1 - 10% Lpp) forward of the stem end 5 is, as described above, that some distance is needed for sufficiently accelerating the slow flow forward of the inflection point 2 from the inflection point 2 to the stem end 5, so that the flow fields forward and rearward of the inflection point 2 differ from each other.

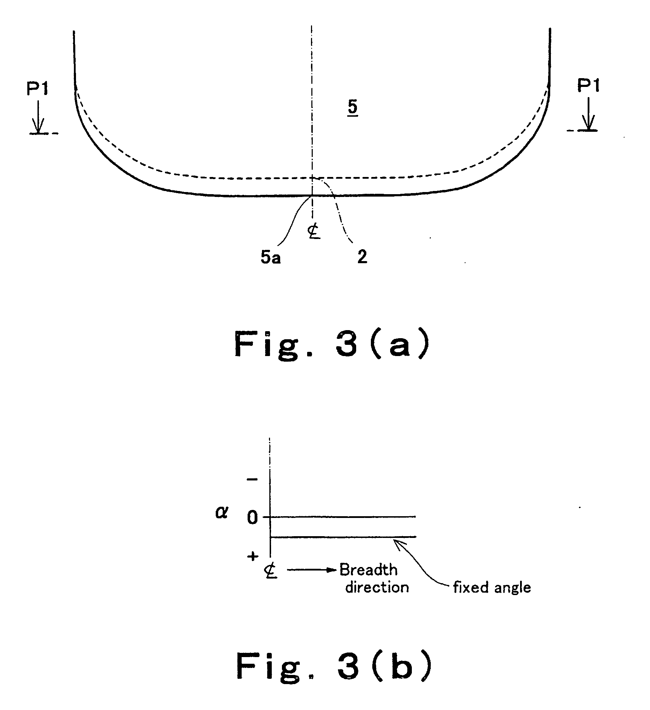

Figs. 3(a), 3(b) show a hull shape in which the angle α of longitudinal sections taken on either side of the hull centreline is equal to the angle α of the section along the ship centre line. That is, the angle α is fixed in the widthways direction of the hull. A dotted line shows the shape of the section at the inflection point 2 (cross section of the inflection point).

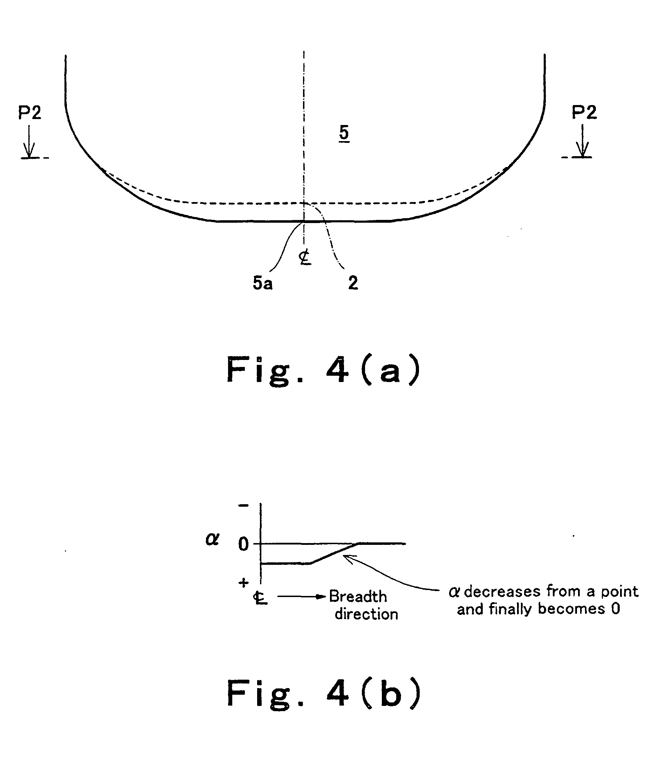

Figs. 4(a), 4(b) show a hull shape in which the angle α of longitudinal sections taken on either side of the hull centreline gradually decreases with respect to the angle α of the section along the centreline such that at respective points on either side of the centreline, the angle α is 0° and at those points, the respective longitudinally extending lines connecting the inflection point 2 to the stem end 5 are horizontal.

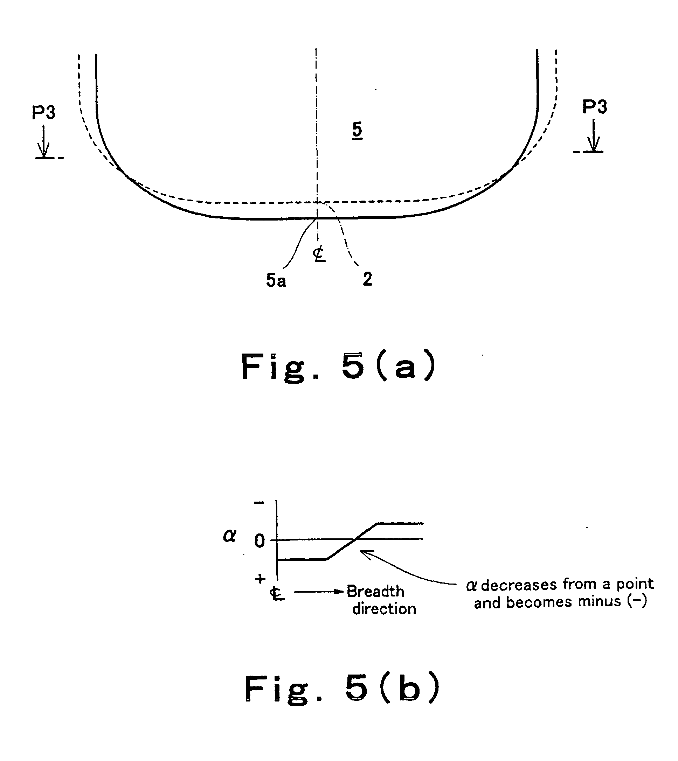

Figs. 5(a), 5(b) show a hull shape in which angle α of longitudinal sections taken on either side of the hull centreline decreases with respect to the angle α of the section along the hull centreline to respective knuckle points at which the angle α is 0° and outwardly of the knuckle points, the waterline contour is smoothly curved.

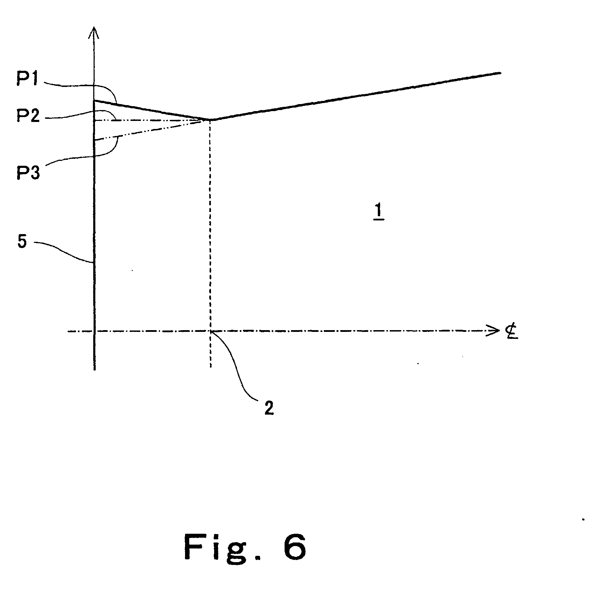

Fig. 6 shows waterline sections respectively taken along lines P1-P1, P2-P2, and P3-P3 of Figs. 3 to 5. The waterline shape P1 in case of Fig. 3 has a width increased from the inflection point 2 to the stem end 5. The waterline shape P2 in case of Fig. 4 extends in parallel with the ship centre line from the inflection point 2 to the stem end 5. The waterline shape P3 in case of Fig. 5 is gently curved from the inflection point 2 to the stem end 5, thereby preventing the flow from going away from the hull.

As should be understood from the foregoing, it is preferable that in the stem profile form, the height of the lower end 5a of the stem end 5 from a base line of the hull sectioned along the ship centre line is constant or gradually increased, and the two-dimensional shape is gradually changed toward a gunwale according to a function and thereby made into a three-dimensional shape.

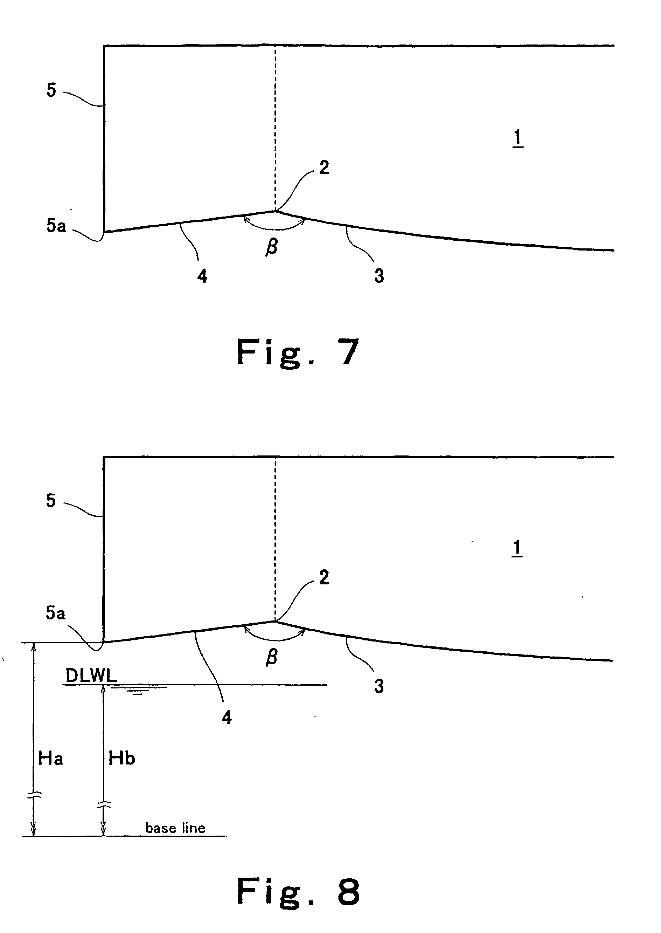

As shown in Fig. 7, it is preferable that an angle β made between a tangential line in the range of 0. 1 - 10% Lpp from the stem end 5 and a tangential line of a stem profile, i.e., an angle β at which tangential lines forward and rearward of the inflection point 2 at the hull bottom intersect is set to 140 - 180 degrees. In this range, the reduction effect of the stem wave resistance is much greater than the drag.

As shown in Fig. 8, the ratio γ (Ha/Hb) of the height Ha of the lower end 5a of the stem end 5 from the base line to the height Hb of the design draught is set to 0.95 - 1.2. The positioning of the lower end 5a of the stem end 5 at the vicinity of the design draught and the accelerated flow from the lower end 5a of the stem end 5 are capable of cooperatively smoothing the disturbed surface breaking and the stem wave.

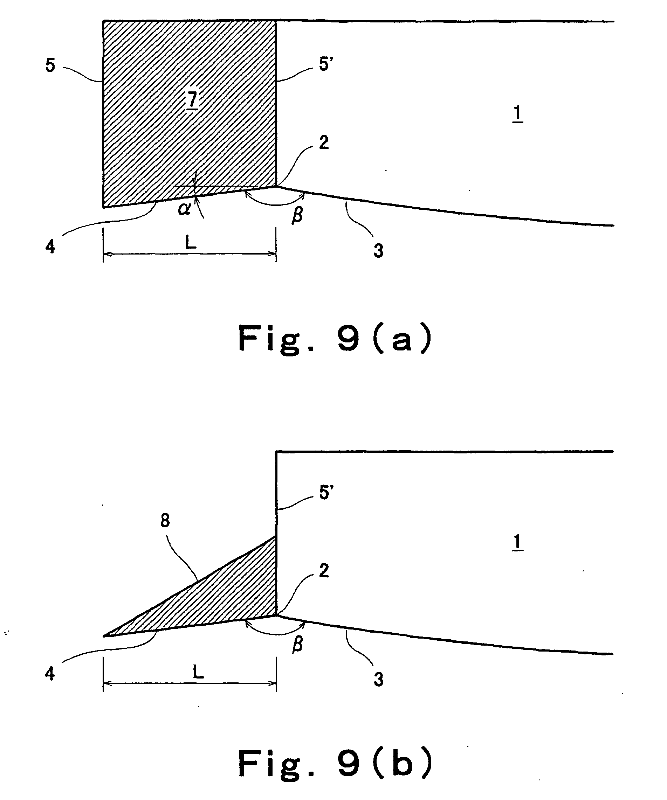

As indicated by oblique lines shown in Fig. 9(a), the stem end of an initially designed ship or running ship can be extended. Specifically, a transom stem hull extension 7 extends from an original stern end 5' of an existing ship for accelerating the flow from the original stem end 5' as the inflection point 2. Alternatively, as shown in Fig. 9(b), an extension part 8 having a triangular cross section indicated by oblique lines, may be added to the transom stem end 5' of an existing design. In either case, α, β and the distance L required for accelerating the flow are the same and the beneficial effects described above are obtained.

As should be understood from the foregoing description, according to the present invention, by changing the flow field around the stem to reduce the disturbed surface and the stem wave, instead of lifting the stem end by the lift generated by the trim tab or the wedge like the conventional high speed craft, the stem wave making resistance can be significantly reduced.

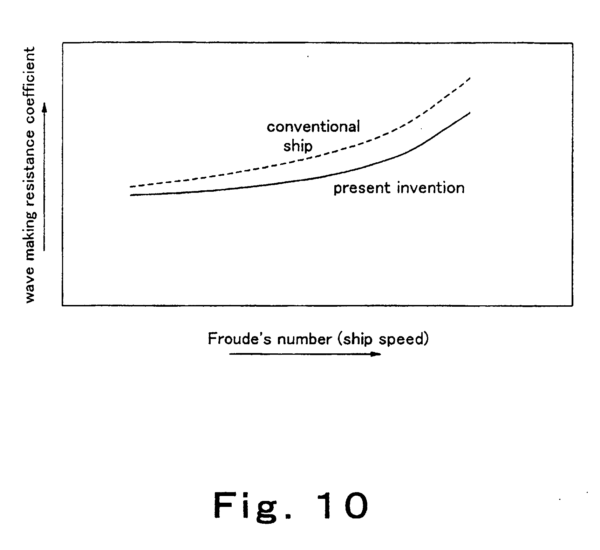

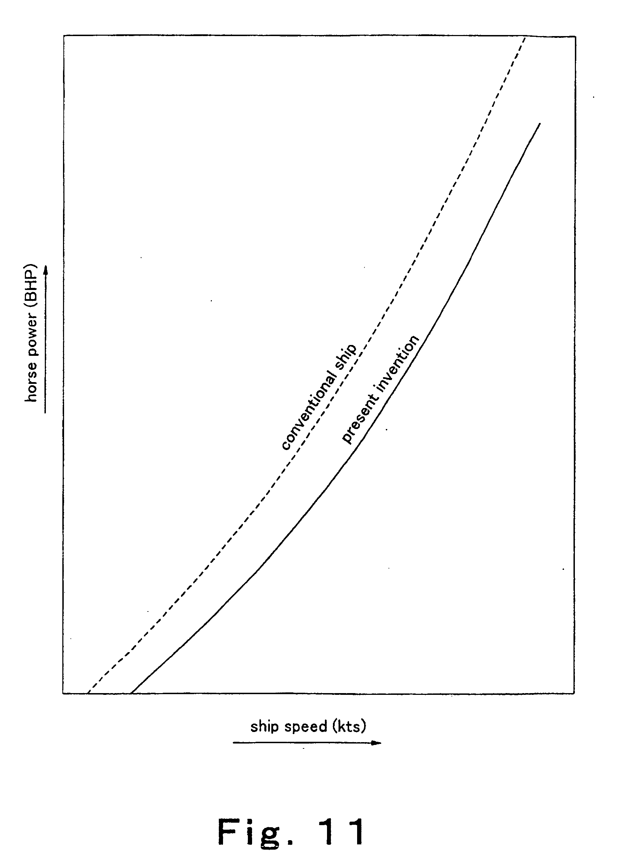

The result will be described with reference to Figs. 10, 11. Fig. 10 shows wave making resistance coefficient on the vertical axis and Froude number (Fn) on the horizontal axis. As shown in Fig. 10, the coefficient of the stem of the present invention is lower than that of the conventional stem and the degree at which the wave making resistance is lowered increases with an increase in the Fn.

Fig. 11 shows horse power on the vertical axis and ship speed on the horizontal axis. The reduction effect is 4 - 10% in terms of a horse power ratio.

It will be appreciated that this invention may be embodied in several forms without departing from the essential characteristics thereof and so the described embodiments are illustrative and not restrictive, the scope of the invention being defined by the appended claims rather than by the description of the embodiments.

## Claims

1. A method of reducing the wave making resistance of a displacement ship having a transom stem and a design speed corresponding substantially to a Froude Number of 0.2 to 0.4, the method comprising providing the hull of said ship with a longitudinal centre line profile (3, 4) having an inflection point (2) at a longitudinal distance of 0.1 to 10% Lpp (length between perpendiculars) from the stem end (5) of the ship, with the portion (3) of the hull profile forward of said inflection point sloping upwardly to said inflection point and the portion (4) of the hull profile rearward of the inflection point being horizontal or sloping downwardly, and positioning the lower end (5a) of the stem end relative to the design draught such that the ratio γ (Ha/Hb) of the distance (Ha) between the base line at the hull centre line and said lower end (5a) and the distance (Hb) between said base line and the design draught at the hull centre line is 0.95 to 1.2 such that, in use, a first flow condition is generated forward of said inflection point and a second flow condition is generated between said inflection point and said stem end to provide accelerated flow rearwardly of said inflection point.

2. A method as claimed in claim 1, wherein said hull centre line profile (4) between said stem end (5) and said inflection point (2) is provided by fitting an extension (7; 8) to the stem end (5') of an existing ship.

3. A displacement ship having a transom stem (5) and a longitudinal hull centre line profile (3, 4) defining an inflection point (2), with a portion (3) of the hull centre line profile forward of said inflection point sloping upwardly to said inflection point and the portion (4) of the hull centre line profile rearwardly of the inflection point ceasing to slope upwardly, **characterised in that** the ship has a design speed corresponding substantially to a Froude Number of 0.2 to 0.4, **in that** the longitudinal distance between the stem end (5) of the ship and said inflection point (2) is 0.1 to 10% Lpp (length between perpendiculars) and **in that** the lower end (5a) of the stem end (5) is positioned relative to the design draught such that the ratio γ (Ha/Hb) of the distance (Ha) between the base line at the hull centre line and said lower end (5a) of the stern end and the distance (Hb) between said base line and the design draught at the hull centre line is 0.95 to 1.2 such that, in use, a first flow condition is generated forward of said inflection point and a second flow condition is generated between said inflection point and said stem end to provide an accelerated flow rearwardly of said inflection point.

4. A ship as claimed in claim 3, wherein from the inflection point (2) to the stem end (5), the longitudinal centre line profile is flat or gently curved and a line connecting the inflection point (2) to the lower end (5a) of the stern end (5) is horizontal or downwardly inclined with respect to the design load waterline (DLWL) such that an angle α made between said line and the design load waterline is 0 to 20 degrees.

5. A ship as claimed in claim 3 or 4, wherein an angle β at which tangential lines forward and rearward of the inflection point (2) at the hull bottom intersect is 140 to 180 degrees.

6. A ship as claimed in claim 3, 4 or 5, wherein the distance of the lower end of the stem end (5) from the base line is constant or increases in the widthways direction of the hull on either side of the hull centreline.

7. A ship as claimed in any one of claims 3 to 6, wherein said hull centre line profile (4) between said stem end (5) and said inflection point is defined by an extension (7; 8) extending from the stem end (5') of an existing ship.

## Patentansprüche

1. Verfahren zum Verringern des Wellenwiderstandes eines Verdrängungsschiffes mit einem Transom-Heck und einer Sollgeschwindigkeit, die im Wesentlichen einer Froude-Zahl von 0,2 bis 0,4 entspricht, wobei das Verfahren umfasst: Versehen des Schiffsrumpfes mit einem longitudinalen Mittschiffsprofil (3, 4), das in einem longitudinalen Abstand von 0,1 bis 10 % Lpp (Baulänge) vom Heck (5) des Schiffes einen Wendepunkt (2) besitzt, wobei der Abschnitt (3) des Schiffsrumpfprofils vor dem Wendepunkt nach oben zu dem Wendepunkt geneigt ist und der Abschnitt (4) des Schiffsrumpfprofils hinter dem Wendepunkt horizontal ist oder nach unten geneigt ist, und Positionieren des unteren Endes (5a) des Hecks in Bezug auf den Solltiefgang in der Weise, dass das Verhältnis γ (Ha/Hb) des Abstandes (Ha) zwischen der Basislinie der Rumpf-Mittschiffslinie und dem unteren Ende (5a) zu dem Abstand (Hb) zwischen der Basislinie und dem Solltiefgang bei der Rumpf-Mittschiffslinie im Bereich von 0,95 bis 1,2 liegt, so dass im Betrieb vor dem Wendepunkt ein erster Strömungszustand erzeugt wird und zwischen dem Wendepunkt und dem Heck ein zweiter Strömungszustand erzeugt wird, um hinter dem Wendepunkt eine beschleunigte Strömung zu schaffen.

2. Verfahren nach Anspruch 1, bei dem das Mittschiffsprofil (4) des Schiffsrumpfes zwischen dem Heck (5) und dem Wendepunkt (2) durch Anbringen einer Verlängerung (7-8) an das Heck (5') eines vorhandenen Schiffes geschaffen wird.

3. Verdrängungsschiff mit einem Transom-Heck (5) und einem longitudinalen Schiffsrumpf-Mittschiffsprofil (3, 4), das einen Wendepunkt (2) definiert, wobei ein Abschnitt (3) des Schiffsrumpf-Mittschiffsprofils vor dem Wendepunkt nach oben zu dem Wendepunkt geneigt ist und der Abschnitt (4) des Schiffsrumpfs-Mittschiffsprofils hinter dem Wendepunkt nicht mehr nach oben geneigt ist, **dadurch gekennzeichnet, dass** das Schiff eine Sollgeschwindigkeit besitzt, die im Wesentlichen einer Froude-Zahl im Bereich von 0,2 bis 0,4 entspricht, dass der longitudinale Abstand zwischen dem Heck (5) des Schiffes und dem Wendepunkt (2) im Bereich von 0,1 bis 10 % Lpp (Baulänge) liegt und dass das untere Ende (5a) des Hecks (5) in Bezug auf den Solltiefgang in der Weise positioniert ist, dass das Verhältnis γ (Ha/Hb) des Abstandes (Ha) zwischen der Basislinie bei der Schiffsrumpf-Mittschiffslinie und dem unteren Ende (5a) des Hecks zu dem Abstand (Hb) zwischen der Basislinie und dem Solltiefgang bei der Schiffsrumpf-Mittschiffslinie im Bereich von 0,95 bis 1,2 liegt, derart, dass im Betrieb vor dem Wendepunkt ein erster Strömungszustand erzeugt wird und zwischen dem Wendepunkt und dem Heck ein zweiter Strömungszustand erzeugt wird, um hinter dem Wendepunkt eine beschleunigte Strömung zu schaffen.

4. Schiff nach Anspruch 3, bei dem das longitudinale Mittschiffsprofil zwischen Wendepunkt (2) und Heck (5) eben oder leicht gekrümmt ist und eine den Wendepunkt (2) mit dem unteren Ende (5a) des Hecks (5) verbindende Linie in Bezug auf die Solllast-Wasserlinie (DLWL) horizontal oder nach unten geneigt ist, derart, dass ein Winkel α, der zwischen dieser Linie und der Solllast-Wasserlinie gebildet wird, im Bereich von 0 bis 20 Grad liegt.

5. Schiff nach Anspruch 3 oder 4, bei dem ein Winkel β, unter dem sich Tangentiallinien vor und hinter dem Wendepunkt (2) an dem Schiffsrumpfboden schneiden, im Bereich von 140 bis 180 Grad liegt.

6. Schiff nach Anspruch 3, 4 oder 5, bei dem der Abstand des unteren Endes des Hecks (5) von der Basislinie in Breitenrichtung des Schiffsrumpfes konstant ist oder auf jeder Seite der Schiffsrumpf-Mittschiffslinie zunimmt.

7. Schiff nach einem der Ansprüche 3 bis 6, bei dem das Schiffsrumpf-Mittschiffsprofil (4) zwischen dem Heck (5) und dem Wendepunkt durch eine Verlängerung (7; 8) definiert ist, die sich von dem Heck (5') eines vorhandenen Schiffes erstreckt.

## Revendications

1. Procédé de réduction de la résistance à la formation de vagues d'un navire à tirant d'eau muni d'un tableau arrière et ayant une vitesse nominale correspondant pratiquement à un nombre de Froude compris entre 0,2 et 0,4, le procédé comprenant la mise en oeuvre de la coque dudit navire avec un profil selon la ligne centrale longitudinale (3, 4) ayant un point d'inflexion (2) situé à une distance longitudinale comprise entre 0,1 et 10 % de la longueur entre perpendiculaires (lpp) à partir de l'extrémité de poupe (5) du navire, la partie (3) du profil de coque située en avant dudit point d'inflexion étant inclinée vers le haut en direction dudit point d'inflexion et la partie (4) du profil de coque située vers l'arrière du point d'inflexion étant horizontale ou inclinée vers le bas, et le positionnement de l'extrémité inférieure (5a) de l'extrémité de poupe relative au tirant d'eau nominal de telle sorte que le rapport γ (Ha/Hb) de la distance (Ha) entre la ligne de base au niveau de la ligne centrale de la coque et ladite extrémité inférieure (5a) à la distance (Hb) entre ladite ligne de base et le tirant d'eau nominal au niveau de la ligne centrale de la coque soit compris entre 0,95 et 1,2 de telle sorte que, en cours d'utilisation, une première condition d'écoulement soit générée en avant dudit point d'inflexion et une seconde condition d'écoulement soit générée entre ledit point d'inflexion et ladite extrémité de poupe pour assurer un écoulement accéléré vers l'arrière dudit point d'inflexion.

2. Procédé selon la revendication 1, dans lequel ledit profil de ligne centrale de la coque (4) entre ladite extrémité de poupe (5) et ledit point d'inflexion (2) est obtenu en implantant une extension (7 ; 8) à l'extrémité de poupe (5') d'un navire existant.

3. Navire à tirant d'eau muni d'un tableau arrière (5) et ayant un profil longitudinal de ligne centrale de coque (3, 4) définissant un point d'inflexion (2), une partie (3) de la ligne centrale de la coque située en avant dudit point d'inflexion étant inclinée vers le haut vers ledit point d'inflexion et la partie (4) du profil de la ligne centrale de la coque située vers l'arrière du point d'inflexion cessant d'être inclinée vers le haut, **caractérisé en ce que** le navire a une vitesse nominale correspondant pratiquement à un nombre de Froude compris entre 0,2 et 0,4, **en ce que** la distance longitudinale entre l'extrémité de poupe (5) du navire et ledit point d'inflexion (2) est comprise entre 0,1 et 10 % de la longueur entre perpendiculaires (lpp) et **en ce que** l'extrémité inférieure (5a) de l'extrémité de poupe (5) est positionnée relativement au tirant d'eau nominal de telle sorte que le rapport γ (Ha/Hb) de la distance (Ha) entre la ligne de base au niveau de la ligne centrale de la coque et ladite extrémité inférieure (5a) à la distance (Hb) entre ladite ligne de base et le tirant d'eau au niveau de la ligne centrale de la coque soit compris entre 0,95 et 1,2 de telle sorte que, en cours d'utilisation, une première condition d'écoulement soit générée en avant dudit point d'inflexion et une seconde condition d'écoulement soit générée entre ledit point d'inflexion et ladite extrémité de poupe pour assurer un écoulement accéléré vers l'arrière dudit point d'inflexion.

4. Navire selon la revendication 3, dans lequel, entre le point d'inflexion (2) et l'extrémité de poupe (5), le profil de la ligne centrale longitudinale est plat ou légèrement courbé et une ligne reliant le point d'inflexion (2) et l'extrémité inférieure (5a) de l'extrémité de poupe (5) est horizontale ou inclinée vers le bas par rapport à la ligne de flottaison de charge théorique (DLWL) de telle sorte qu'un angle α existant entre ladite ligne et la ligne de flottaison de charge théorique soit compris entre 0 et 20 degrés.

5. Navire selon la revendication 3 ou 4, dans lequel un angle β selon lequel se coupent les lignes tangentielles situées en avant et en arrière du point d'inflexion (2) dans la partie inférieure de la coque est compris entre 140 et 180 degrés.

6. Navire selon la revendication 3, 4 ou 5, dans lequel la distance entre l'extrémité inférieure de l'extrémité de poupe (5) et la ligne de base est constante ou augmente dans la direction de la largeur de la coque de part et d'autre de la ligne centrale de la coque.

7. Navire selon l'une quelconque des revendications 3 à 6, dans lequel ledit profil de la ligne centrale de la coque (4) situé entre ladite extrémité de. poupe (5) et ledit point d'inflexion est défini par une extension (7 ; 8) se prolongeant depuis l'extrémité de poupe (5') d'un navire existant.
